# EUROPEAN PATENT SPECIFICATION

(11) **EP 1 027 670 B1**
(45) Date of publication and mention of the grant of the patent: **14.08.2002**
(21) Application number: 98952480.6
(22) Date of filing: 06.11.1998
(51) Int. Cl.: G06F 17/30

(54) **DATABASE BUILDING SYSTEM**
DATENBANKHERSTELLUNGSSYSTEM
SYSTEME DE CONSTRUCTION D'UNE BASE DE DONNEES

(30) Priority: 07.11.1997 CA 2220565
(43) Date of publication of application: 16.08.2000
(73) Proprietor: CROSSKEYS SYSTEMS CORPORATION, Kanata Ontario K2K 2W5 (CA)
(72) Inventor: MUNN, Gwen, Nepean, Ontario K2J 2N9 (CA); McCLOSKEY, Michael, J., Ottawa, Ontario K1V 0V9 (CA)
(74) Representative: Harding, Richard Patrick
(86) International application number: CA9801043
(87) International publication number: WO9924919

(56) References cited:
- GUO D ET AL: "Object-oriented knowledge representation and its graphical display" PROCEEDINGS OF THE SIXTH IASTED INTERNATIONAL SYMPOSIUM. EXPERT SYSTEMS: THEORY AND APPLICATION, LOS ANGELES, CA, USA, 14-16 DEC. 1989, pages 170-173, XP002091824 ISBN 0-88986-137-4, 1989, Anaheim, CA, USA, ACTA Press, USA
- BUTTERWORTH P ET AL: "THE GEMSTONE OBJECT DATABASE MANAGEMENT SYSTEM" COMMUNICATIONS OF THE ASSOCIATION FOR COMPUTING MACHINERY, vol. 34, no. 10, 1 October 1991, pages 64-77, XP000266967
- BERTINO E ET AL: "OBJECT-ORIENTED DATABASE MANAGEMENT SYSTEMS: CONCEPTS AND ISSUES" COMPUTER, vol. 24, no. 4, 1 April 1991, pages 33-47, XP000227753

## Description

This invention relates to a method of updating an object oriented database in an application environment where an object model must be maintained both in application code as well as in an object oriented database.

In a typical development environment, there is no easy, reliable way to ensure that the object model remains consistent between the two environments. Any changes to the object model that are made within the application must be made manually in the database as well. The same holds true if the change to the object model is made within the database - it must then be manually reproduced within the application. This mode of development is prone to error and is cumbersome to manage.

GemStone, by GemStone Systems, is an example of a commercially available object oriented database designed for a large scale computing environment, which also provides a multi-user Smalltalk environment that allows users to store and execute Smalltalk code within the database. Smalltalk is a complete development environment for implementing object-oriented applications. In an object oriented environment, a class is a specification of structure (instance variables), behavior (methods), and inheritance (parents, or recursive structure and behavior) for objects. The class and behavior must be written within the GemStone environment, and created within the Smalltalk environment

This requires the user to take action on a per class/per method basis to ensure that the class is included within the database. This is a time-consuming, error prone exercise that makes changes to the structure of the object model difficult to properly incorporate into an existing model. Because of difficulty of changing the object model, it was necessary to "freeze" it very early in the development cycle, thus preventing it from evolving easily during development of the software.

Migration of existing objects after a change to the object model structure is also a time consuming process, requiring the user to write scripts to perform this function.

An object of the present invention is to alleviate the afore-mentioned problem.

According to the present invention there is provided a method of building an object oriented database from an object oriented programming environment, comprising the steps of tagging classes and any required behaviour in the programming environment as being database classes, extracting such tagged classes from the programming environment, and compiling them into a running object oriented database.

This invention provides a simple, easily reproduced and manageable method of ensuring that the database is kept in synch with the object model stored within a source code repository.

The method in accordance with the invention allows users to very quickly create or re-create their database with their complete object model intact. In a preferred embodiment, it very simply extracts the classes from a Smalltalk image all of the classes, plus any required behavior, that the user has tagged as being database class and behavior and compiles them into a running GemStone™ database.

In accordance with the invention, a new database, with complete object model, can be created in minutes. Changes to the object model are very easily incorporated into the database. This provides a very flexible environment in which to develop software, as the object model can continue to evolve throughout the development cycle. Code stored within the database can be updated with the push of a button. Furthermore, entire classes can be included or excluded from the database and portions of class behavior can be selected for inclusion or exclusion from the database.

Migration of existing objects, and initialization of all new instance variables is performed automatically.

The invention also provides a computer system, comprising an object oriented programming environment, object oriented database, means for tagging classes and any required behaviour in the programming environment as being database classes, means for extracting such tagged classes from the programming environment, and means for compiling the extracted classes into the object oriented database.

The invention will now be described in more detail, by way of example only, with reference to the accompanying drawings, in which:

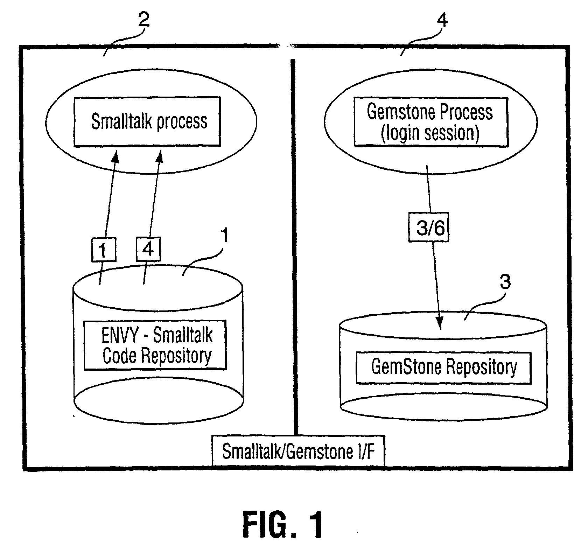

Figure 1 is a diagram illustrating the process of building a Gemstone database from a Smalltalk image;
Figure 2 shows a small subset of classes in an object model for a Smalltalk and Gemstone environment; and
Figure 3 shows the new class structure after the introduction of a new card into the system.

The user first starts a Smalltalk process and a Gemstone process by logging into Gemstone from Smalltalk.

From the ENVY-Smalltalk code repository 1 in the Smalltalk environment 2, the user first identifies and tags Smalltalk classes that are to be included in the Gemstone database 3 in the Gemstone environment 4. Each class responds to a class method that indicates how much of the class should be placed in the database. The default is none. Other options include just the class definition, but no methods, the class definition plus accessor methods, the class definition, plus all methods, the class definition, plus all methods marked as GemStone methods, and just methods marked as GemStone methods but not the class definition.

The actual build process is a two-pass process: Pass 1 creates all classes in GemStone that are marked as 'add class definition to database'. Pass 2 then goes through all classes and adds all methods that are marked as belonging in the database.

This process must be executed twice - once for Kernel class updates to the database, which require GemStone system privileges, and then again for the applications classes, which should be done with non-system database privileges.

Once the database has been created, the Smalltalk/Envy image is kept up-to-date with any GemStone code changes by placing all changes made through the GemStone class editors back into Envy.

The actual process involves extracting, class by class, all of the class definitions that have been tagged as GemStone classes and then creating the classes inside GemStone. The newly created classes are saved in Gemstone repository 3.

Next all of the methods that have been tagged as GemStone methods are extracted, class by class, and created as methods inside GemStone. The newly created methods are then saved inside GemStone.

This process must be repeated twice, once while logged in as a Gemstone system user to update Smalltalk Kernel classes, and once while logged in a non-system user to update all application classes.

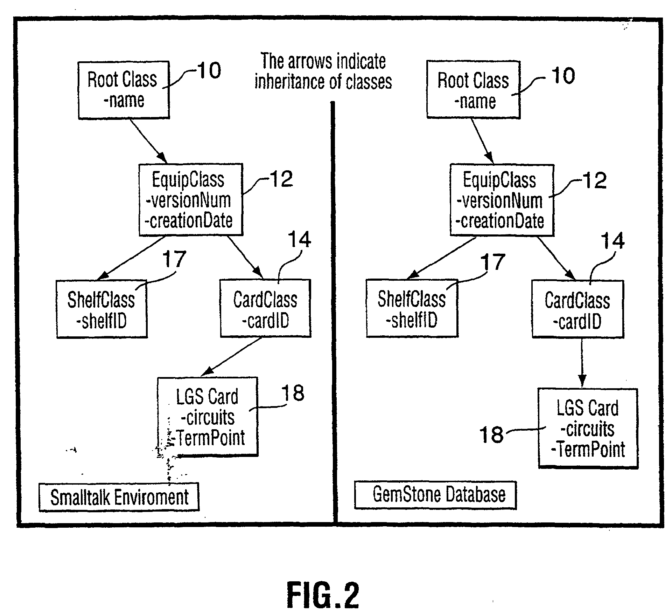

A more specific example will now be described. Assume that there are several classes that have already been created in both the application development environment and the database. This means that these classes have already been tagged as database classes and some of their methods have also been marked as belonging in the database. A small subset of classes is shown in Figure 2. The example Smalltalk object model at this point is identical to the GemStone object model.

The object model in this example models the peripheral equipment, for example, the cards inserted into a peripheral shelf, in a Newbridge Networks 3600 Bandwidth Manager. TM?

The model includes a root class 10, an equipment class 12, card class 14, shelf class 17, and LGS card 18, which models the actual card in question, in this case a Loop/Ground Subscriber (LGS) card. This has modeled attributes, in this case the circuits and termination point.

If we now assume, for example, that another type of LGS card is to be introduced that contains ports as well as circuits, and no longer has a TermPoint. This change causes the developer to create a new class that is a Generic LGS class, that has circuits as an instance variable; as well as creating a new class to represent the particular new LGS card. This is a substantial change to the object model. The following steps are taken to make the appropriate change in the Smalltalk environment:
1. Add a new class, LGSGeneric20 as a subclass of CardClass 14. LGSGeneric is tagged as a DB class, by setting a class method with the appropriate symbol.
2. Make LGSClass 18 a subclass of LGSGeneric 20.
3. Add a new class 22, LGSVersion2 as a subclass of LGSGeneric. Tag LGSVersion2 as a DB class by setting a class method with the appropriate symbol.

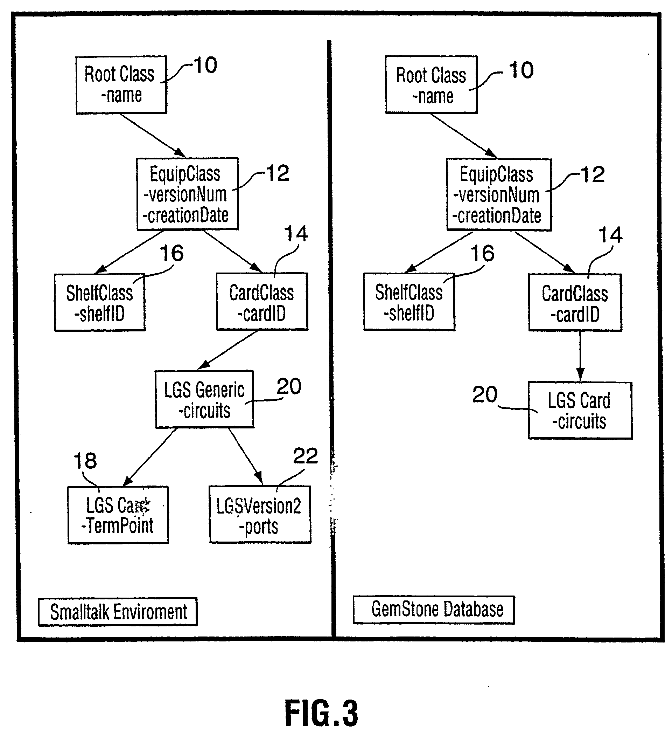

The new class structure is now as shown in Figure 3.

Now that the object model changes have been made in the Smalltalk environment, the GemStone and Smalltalk environments are no longer in synch. In a typical development environment, all of the changes that had been made in the Smalltalk environment would now have all be made manually in the GemStone environment, which is tedious, time consuming and error-prone.

Using the DB Building Process, updating the Gemstone environment to is a simple task that guarantees that the Smalltalk and GemStone object models are identical.

The Process is as follows:
1. Log on to the GemStone database.
2. For all classes in the Smalltalk environment, look for tag that indicates the class belongs in the database.
3. If a class does belong in the database, create it inside GemStone.
4. For all classes in the Smalltalk environment, look for all methods that have been tagged as belonging in the database.
5. If a method belongs in the database, compile the method into GemStone.
6. For all classes that have been upgraded in the database (if any), migrate all old version instances to the new version.
7. Initialize any new instances variables to their default values in the newly migrated instances.
8. Commit all changes to make them persistent.

The following pseudo-code is used as an example of the implementation in VisualWorks and GemBuilder for Smalltalk:

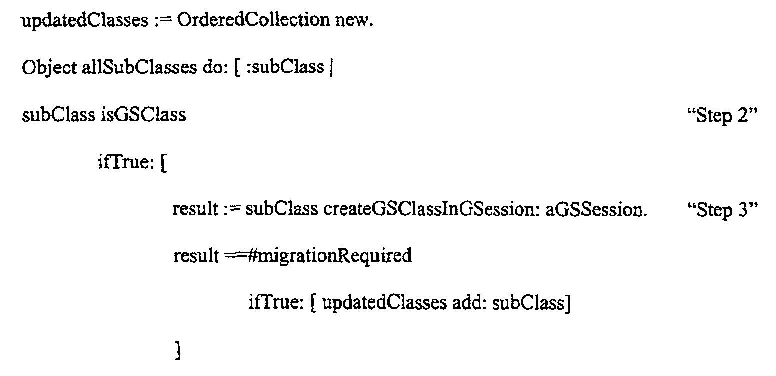

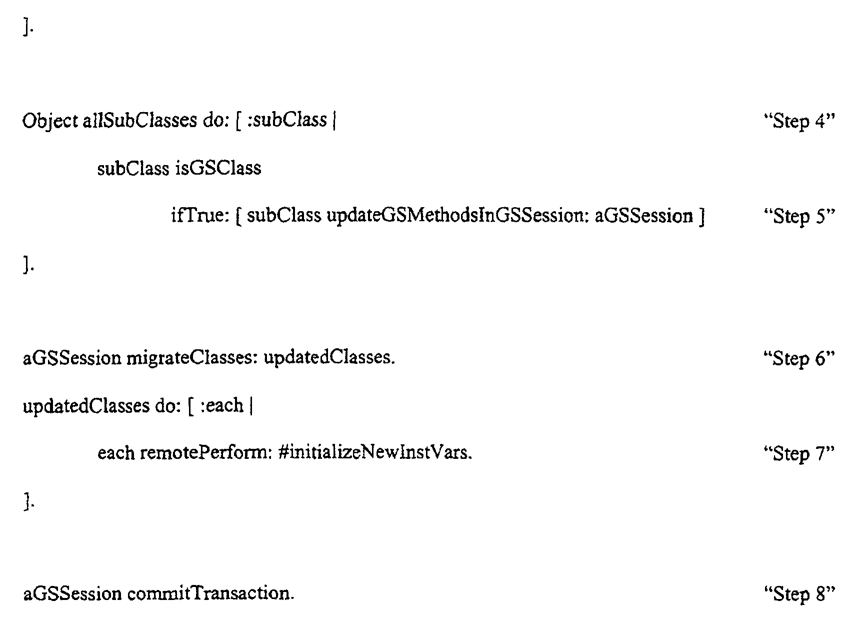

In step 3 of the pseudo-code, the method *createGSClassInGSSession:* ultimately makes use of the GemStone/Builder method *createGemStoneClassFor:inDictionaryNamed:.* To update the methods in GemStone, the GemBuilder methods *compileClassMethod:forClass:inMethodCategory*:, and *compileInstanceMethod:forClass:inMethodCategory*: are used by *updateGSMethodsInGSSession:.*

Once this process is complete, the object model within the database is once again identical to the object model within the application.

The invention has been described with reference to the Smalltalk and Gemstone environments, but it will be understood by one skilled in the art that it is also applicable to other objected oriented programming and database environments respectively.

## Claims

1. A method of building an object oriented database from an object oriented programming environment, comprising the steps of tagging classes and any required behaviour in the programming environment as being database classes, extracting such tagged classes from the programming environment, and compiling them into a running object oriented database.

2. A method, as claimed in claim 1, further comprising tagging in the object oriented programming environment any methods that are required in the object oriented database, extracting the tagged methods, class by class, creating the tagged methods inside the object oriented database, and saving the newly created methods inside the object oriented database.

3. A method as claimed in claim 2, wherein said method is repeated twice, once while logged in as a user of the object oriented database to update kernel classes, and once while logged in as a non-system user to update all application classes.

4. A method as claimed in claim 1, wherein the following steps are performed to update the object-oriented database:
(i) for all classed into the programming environment, look for a tag that indicates the class belongs in the database; and
(ii) if a class belongs in the database, create it in the database.

5. A method as claimed in claim 4, wherein the following additional steps are performed to update the object-oriented database;
(iii) for all classes in the programming environment, look for all methods that have been tagged as belonging in the database;
(iv) if a method belongs in the database, compile the method into the database;
(v) for all classes that have been upgraded in the database, migrate old version instances to new version;
(vi) initialize any new instances variables to their default values in the newly migrated instances;
(vii) commit all changes to make them persistent.

6. A method as claimed in any one of claims 1 to 5, wherein said object-oriented database is an object model of peripheral equipment in a digital communications network.

7. A computer system comprising an object oriented programming environment, an object oriented database, means for tagging classes and any required behaviour in the programming environment as being database classes, means for extracting such tagged classes from the programming environment, and means for compiling the extracted classes into the object oriented database.

8. A computer system as claimed in claim 7, further comprising means for tagging in the object oriented programming environment any methods that are required in the object oriented database, means for extracting the tagged methods, class by class, means for creating the tagged methods inside the object oriented database, and means for saving the newly created methods inside the object oriented database.

## Patentansprüche

1. Verfahren zum Aufbau einer objektorientierten Datenbank aus einer objektorientierten Programmierumgebung, das die folgenden Schritte umfaßt: die Markierung von Klassen und von beliebigen erforderlichen Verhalten in der Programmierumgebung als Datenbankklassen, das Extrahieren von auf solche Weise markierten Klassen aus der Programmierumgebung und deren Kompilation in eine bestehende objektorientierte Datenbank.

2. Verfahren nach Anspruch 1, **dadurch gekennzeichnet, daß** es ferner die Markierung - in der objektorientierten Programmierumgebung - von beliebigen für die objektorientierte Datenbank erforderlichen Verfahren umfaßt, sowie das Extrahieren der markierten Verfahren Klasse um Klasse, das Erstellen der markierten Verfahren in der objektorientierten Datenbank und das Speichern der neu erstellten Verfahren in der objektorientierten Datenbank.

3. Verfahren nach Anspruch 2, wobei das Verfahren zweimal durchgeführt wird - einmal zur Aktualisierung der Kernklassen, während man als Benutzer der objektorientierten Datenbank angemeldet ist, und einmal zur Aktualisierung aller Anwendungsklassen, während man als Nichtsystembenutzer angemeldet ist.

4. Verfahren nach Anspruch 1, wobei zur Aktualisierung der objektorientierten Datenbank die folgenden Schritte unternommen werden:
(i) bei allen Klassen in der Programmierumgebung wird nach einem Kennzeichen gesucht, das die betreffende Klasse als eine in die Datenbank gehörende Klasse anzeigt; und
(ii) wenn die Klasse in die Datenbank gehört, wird sie in der Datenbank erstellt.

5. Verfahren nach Anspruch 4, wobei zur Aktualisierung der objektorientierten Datenbank die folgenden zusätzlichen Schritte unternommen werden:
(iii) bei allen Klassen in der Programmierumgebung wird nach den Verfahren gesucht, die als in die Datenbank gehörende Verfahren markiert sind, und
(iv) wenn ein Verfahren in die Datenbank gehört, wird es in die Datenbank hineinkompiliert;
(v) bei allen Klassen, die in der Datenbank aktualisiert wurden, wird die alte Version in die neue Version migriert;
(vi) die Variablen der neuen Exemplare werden auf ihre Standardwerte initialisiert;
(vii) alle erforderlichen Änderungen werden durchgeführt, um die Klassen permanent zu machen.

6. Verfahren nach einem der Ansprüche 1 bis 5, wobei die objektorientierte Datenbank ein Objektmodell eines Peripheriegeräts in einem Digitalkommunikationsnetz ist.

7. Computersystem, das eine objektorientierte Programmierumgebung, eine objektorientierte Datenbank, Mittel zur Markierung von Klassen und aller erforderlichen Verhalten in der Programmierumgebung als Klassen für eine Datenbank umfaßt, sowie Mittel zum Extrahieren von auf solche Weise markierten Klassen aus der Programmierumgebung und Mittel zur Kompilation der extrahierten Klassen in die Datenbank.

8. Computersystem nach Anspruch 7, das ferner Mittel zur Markierung - in der objektorientierten Programmierumgebung - aller für die objektorientierte Datenbank erforderlichen Verfahren umfaßt, sowie Mittel-zum Extrahieren von auf solche Weise markierten Verfahren - Klasse um Klasse, Mittel zum Erstellen der markierten Verfahren innerhalb der objektorientierten Datenbank, und Mittel zum Speichern der neu erstellten Verfahren in der objektorientierten Datenbank.

## Revendications

1. Une méthode de constitution d'une base de données par objet à partir d'un environnement de programmation par objet, qui comprend les étapes de l'étiquetage des classes et tout comportement nécessaire dans l'environnement de programmation se rapportant à des classes de bases de données, pour l'extraction de telles classes étiquetées de l'environnement de programmation et leur compilation en une base de données courante, par objet.

2. Une méthode, selon la revendication 1, qui comprend aussi l'étiquetage, dans l'environnement de programmation par objet, de toute méthode requise dans la base de données par objet, pour l'extraction des méthodes d'étiquetage, classe par classe, la création des méthodes étiquetées à l'intérieur de la base de données par objet, et la sauvegarde des méthodes nouvellement créées à l'intérieur de la base de données par objet.

3. Une méthode selon la revendication 2, où ladite méthode est répétée deux fois, une fois pendant la séance de communication à titre d'utilisateur de la base de données par objet en vue de mettre à jour les classes de noyau, et une fois pendant la séance de communication comme non utilisateur du système afin de mettre à jour les classes d'application.

4. Une méthode selon la revendication 1, où les étapes suivantes sont exécutées pour mettre à jour la base de données par objet :
i) pour toutes les classes dans l'environnement de programmation, chercher une étiquette qui indique que la classe appartient à la base de données; et
ii) si une classe appartient à la base de données, la créer dans la base de données.

5. Une méthode selon la revendication 4, où les étapes supplémentaires suivantes sont exécutées afin de mettre à jour la base de données par objet :
iii) pour toutes les classes dans l'environnement de programmation, chercher toutes les méthodes qui ont été étiquetées comme appartenant à la base de données;
iv) si une méthode appartient à la base de données, intégrer la méthode à la base de données;
v) pour toutes les classes qui ont été mises à jour dans la base de données, faire passer les instances de l'ancienne version à la nouvelle version;
vi) initialiser toutes les variables des nouveaux cas à leur valeur implicite dans les instances nouvellement migrées;
vii) sauvegarder tous les changements pour les rendre permanents.

6. Une méthode selon n'importe laquelle des revendications 1 à 5, où ladite base de données par objet est un modèle objet du matériel périphérique dans un réseau de communication numérique.

7. Un système informatique comprenant un environnement de programmation par objet, une base de données par objet, le moyen d'étiqueter des classes et tout comportement requis dans l'environnement de programmation comme étant des classes de bases de données, le moyen d'extraire ces classes étiquetées de l'environnement de programmation, et le moyen de compiler les classes extraites dans la base de données par objet.

8. Un système informatique selon la revendication 7, qui comprend aussi le moyen d'étiqueter, dans l'environnement de programmation par objet, toute méthode requise dans la base de données par objet, le moyen d'extraire les méthodes étiquetées, classe par classe, le moyen de créer les méthodes étiquetées à l'intérieur de la base de données par objet, et le moyen de sauvegarder les méthodes nouvellement créées à l'intérieur de la base de données par objet.
